# EUROPEAN PATENT APPLICATION

(11) **EP 0 572 954 A1**
(43) Date of publication of application: **08.12.1993**
(21) Application number: 93108703.5
(22) Date of filing: 28.05.1993
(51) Int. Cl.: A62D 3/00, B01J 10/00

(54) **Destruction of waste materials containing alumina, silica, calcium and nitrogen by molten salt oxidation**

(30) Priority: 01.06.1992 US 891062
(71) Applicant: ROCKWELL INTERNATIONAL CORPORATION, Seal Beach, California 90740-8250 (US)
(72) Inventor: Stewart, Albert Earl, Lake View Terrace, California 91342 (US)
(74) Representative: Wächtershäuser, Günter, Prof. Dr.

(57) **Abstract**

A waste material containing aluminum, silicon, calcium, or nitrogen elements is destroyed by treatment in a molten salt pool or bath. An oxygen containing gas is introduced simultaneously into the pool melt and above the melt to produce a gaseous combustion product free of NOₓ compounds and a retained ash that will not form deposits within the sparged bed.

## Description

### BACKGROUND OF THE INVENTION

### 1. Field of the Invention

This invention relates to the destruction of waste materials containing alumina, silica, and calcium elements, commonly found as ash constituents in organic wastes, without formation of detrimental ash deposits within the processing equipment, and to the destruction of waste materials containing nitrogen compounds, such as explosives, without the formation and release of NOₓ pollutants. In one of its more particular aspects, this invention relates to a process for destroying waste material utilizing a molten salt containing an alkali metal or alkali earth carbonate or oxide and an alkali earth or alkali metal sulfate.

### 2. Background Art

In the destruction of waste materials such as carbonaceous gas, liquid, and solid waste, it has been round desirable to utilize molten salts in order to take advantage of the higher throughput, shorter. residence time, and better heat transfer which characterize molten salt processes as well as the uniformity of temperature and the high levels of organic chemical destruction inherent in their use.
Examples of molten salt processes are as follows:
U. S. Patent No. 4,145,396 discloses a process for treating organic waste containing a radioactive material such as strontium, cesium, iodine or ruthenium with oxygen in a molten salt bath comprising an alkali metal carbonate and from about 1 to 25 wt% of an alkali metal sulfate.

U. S. Patent No. 4,246,255 discloses a process for the disposal of polychlorinated biphenyls (PCB's) by oxidation in a molten salt comprising an alkali metal carbonate.

While the processes disclosed above are effective for disposing of various waste and for recovering valuable materials therefrom, none of these processes is wholly satisfactory for treating organic waste containing alumina, silica, calcium, and nitrogen elements.

It is accordingly an object of this invention to provide a method for destroying waste material containing alumina, silica, calcium, and nitrogen elements.

It is also an object of this invention to provide a process wherein very complete destruction of waste materials is obtained by use of a molten salt.

It is another object of this invention to provide a process in which the composition of the molten salt is optimized to provide appropriate physical and chemical properties for the efficient conduct of the waste destruction operation. For example, the provision of 1-10 wt% sulfide in the molten salt bed to catalytically reduce nitrogen compounds to nitrogen gas and thus avoid emissions of NOₓ.

Another object of this invention is to provide a process wherein an oxygen containing gas is simultaneously introduced with the waste material entering the melt and also immediately above the melt such that waste material destruction with deficient oxygen occurs in the melt and oxidation of pyrolysis gases with excess oxygen occurs immediately above the molten salt bed. This division of gaseous oxygen allows for controlling the reduction/oxidation potential of the salt melt (thus allowing for the formation of sulfide for the purposes of nitrogen compound destruction and the prevention of ash polymer formation), while simultaneously allowing a maximum throughput of waste in the molten salt, and the destruction of the pyrolysis gases released from the salt bed.

Other objects and advantages of this invention will become apparent in the course of the following detailed description.

### SUMMARY OF THE INVENTION

In general, the present invention provides a process for destroying waste material containing aluminum, calcium, silica, or nitrogen elements which process utilizes a molten salt containing an alkali metal or alkali earth carbonate or oxide and an alkali earth or alkali metal sulfide or sulfate. The process includes the steps of providing in a suitable reaction vessel a molten salt pool containing both a basic alkaline metal or alkaline earth compound selected from the group consisting of alkaline metal or alkaline earth oxides and carbonates and an alkaline metal or alkaline earth sulfate or sulfide and introducing into the molten salt melt the waste material containing aluminum, calcium, silicon, or nitrogen elements and oxygen-containing gas in an amount sufficient such that waste material destruction with deficient oxygen occurs in the melt, thereby converting the waste into a gaseous product containing CO, H₂, CO₂, N₂, and H₂O and introducing an oxygen containing gas immediately above the melt pool such that pyrolysis of these off gases with excess oxygen is occasioned. The gaseous product can, depending on its composition, be used as a source of energy or be vented to the atmosphere in a non-polluting manner. The waste materials retained in the melt can be further processed to recover chemical resource values therefrom.

### Brief Description of the Drawing

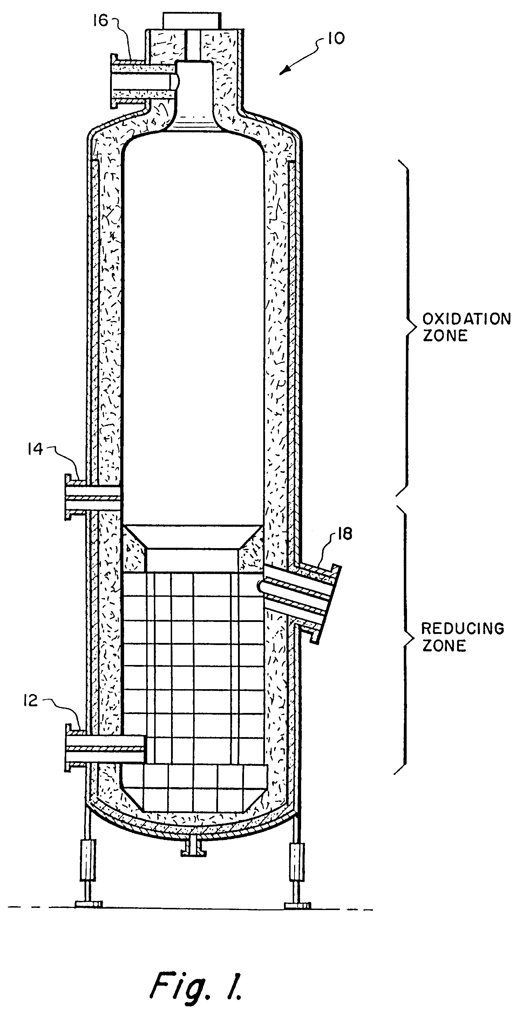

Fig. 1 is a schematic diagram of a preferred embodiment of the present invention.

### Description of the Preferred Embodiment

In the treatment of waste materials as described herein and particularly when utilizing a molten salt, it is essential to have a basic salt present in the molten salt pool or bed in which the waste are being treated in order to neutralize any acidic products such as HCl, H₂SO₄, or HF formed during the destruction of the waste. Alkali metal carbonates, or alkali earth oxides, for example Na₂CO₃, or CaO are particularly desirable for this purpose.

In the case of wastes containing silicon, calcium, and aluminum (constituents of most mineral "ashes"), it has been found that highly viscous, polymer like secondary phases form in the melt beds of vessels being operated in an oxidizing mode. Once formed, these polymeric ash phases cannot be redissolved even by going into a deeply reducing mode of stoichiometric operation. The ash ferns a sticky mass that is thrown up onto the upper walls of the reaction vessel adhering to and building up in size until the entire cross section of the vessel is mostly blocked, causing operations to be terminated. By operating the salt bed in a reducing stoichiometry, these polymeric, sticky types of ash formations are avoided and the buildup of ash constituents can be controlled by periodically draining the melt bed or by using a continuous salt overflow together with continuous injection of makeup salt.

Operation of the melt bed in the reducing mode also allows the destruction of nitrogen containing wastes without the uncontrolled emission of NOₓ compounds as in conventional incineration. Nitrates, nitrites, amines, etc., can thus be destroyed in an environmentally safe manner. The catalytic action of the sulfide in this case is presumed to be:

Reduction of Nitrogen Oxide;

NO + 1/4 Na₂S→1/4 Na₂SO₄ + 1/2 N₂ Reduction of Sulfate;

1/4 Na₂SO₄ + CO → 1/4 Na₂S + CO₂ Net Reaction;

NO + CO → 1/2 N₂ + CO₂

The present invention can be used to treat a wide variety of wastes containing such aforementioned elements. Such wastes include:
Ash Containing Wastes - Low Level Rad Wastes including medical wastes and general chemical lab wastes - wastes with paper, glass, rubber, or dirt and soil constituents.
Nitrogen Containing Wastes - High Explosive Wastes (RDX, TNT, Tetryl), rocket propellants (ammonium perchlorate, nitrocellulose, nitroglycerine), nitrate and nitrite containing materials, amines and other forms of organic or inorganic wastes.

The waste to be treated can be in the form of a gas, liquid or a solid and is readily introduced into the molten salt pool in any convenient manner. In an especially preferred embodiment, the waste is introduced into the molten salt by feeding it beneath the surface of the molten salt pool using compressed air or other gas to transport the waste into the molten salt pool.

An oxygen-containing gas is also introduced into the molten salt pool in order to provide partial or complete combustion of the organic content of the waste material. The oxygen-containing gas may be air, oxygen-enriched air, or pure oxygen. Air is preferred for this purpose because of its low cost and ready availability.

With the introduction of the waste to be treated and oxygen-containing gas into the melt, an oxygen-containing gas is also introduced immediately above the melt, such that waste material destruction with deficient oxygen occurs in the melt and oxidation of pyrolysis gases with excess oxygen occurs immediately above the melt.

The temperature of the molten salt pool can be conveniently within the range of about 700°C to 1400°C and preferably about 900°C to 1200°C. The pressure of the vessel in which the molten salt is contained can be slightly negative, ambient or super-atmospheric pressure of about 2 to 50 atmospheres.

In carrying out the present invention, a molten salt combustor or vessel 10 is provided with appurtenant feeds as shown in Fig. 1. A waste material and feed salt for molten salt make-up is introduced via nozzle 12. Air, under pressure, is also simultaneously introduced via nozzle 12, which air serves as a source of O₂ and conveys the resulting mixture of feed salt, waste and air into molten salt combustor 10, which contains a pool of molten salt. Concurrently, air containing oxygen is also introduced into the molten salt combustor via nozzle 14 such that the air is introduced above the molten salt melt. Off gases exit molten salt combustor 10 and are conducted via nozzle 16 to an appropriate off gas clean-up system for further purification. Overflow molten salt from molten salt combustor 10 is removed by conduit 18.

The invention may be understood by reference to the following example which is intended to be illustrative of the process of the present invention and not in any way limitive thereof.

Into a suitable molten salt combustor vessel 10 is introduced a waste containing low level radioactive laboratory waste including shredded plastic, rubber, paper, glass, miscellaneous halogenated solvents, and some dirt and floor sweepings. The molten salt bath or melt contained in the vessel was made up of 80 wt% sodium carbonate, 10 wt% sodium chloride, and 10 wt% sodium sulfate.

The melt bed or molten salt bath is maintained at an elevated temperature of 850° C to 950° C and under a pressure of 1 psig to 10 atmospheres. Simultaneous with the introduction of the waste material, oxygen is concurrently introduced into the molten salt with the waste, and oxygen is also independently introduced into the vessel above the melt or bath such that waste material destruction with deficient oxygen (0.2 to 0.95 stoichiometric ratio) occurs in the melt and oxidation of pyrolysis gases with excess oxygen (typically 1.2 to 1.5 stoichiometric ratio) occurs above the melt. Any sulfate in the melt under these conditions will largely be reduced to sulfide permitting the catalytic destruction of any nitrogen compounds. Chlorine contained in PVC plastic or as part of the halogenated solvents will be converted to sodium chloride and be retained in the melt pool. Ash that is introduced to the melt pool will also collect in the melt pool, but will not form deposits or otherwise interfere with the process operation until a practical loading limit of 20 to 25 wt% is reached whereupon the vessel may be drained and reloaded with fresh salt (batch operation) or makeup-dilettante fresh salt can be added and a small side stream removed to maintain the melt bed level (continuous operation).

Further to the above, the destruction of waste materials can be occasioned wherein the oxygen-containing gas is simultaneously introduced (a) with the waste material into the melt and (b) into a furnance, kiln, boiler or other heat utilizing device or item of equipment with the pyrolysis gases from the molten salt bath (without benefit of direct over bed or bath injection of oxygen containing gas) to directly oxidize the gases therein and release the heat content of the wastes within the heat utilizing device.

It will, of course, be realized that various modifications can be made to the design and operation of the process of this invention without departing from the spirit thereof.

Thus, while the principle, preferred design and mode of operation of the invention have been explained and what is now considered to represent a best embodiment has been illustrated and described, it should be understood that within the scope of the appended claims, the invention cart be practiced otherwise than as specifically illustrated and described.

## Claims

1. A process for destroying waste material containing an alumina, amine, silica, calcium, or nitrogen element which comprises:
providing a molten salt bath containing a basic alkaline earth metal or alkaline earth compound selected from the group consisting of alkaline metal or alkaline earth oxides, carbonates, sulfates, sulfides, or halide;
introducing into said molten salt bath a aluminum, calcium, silicon, or nitrogen containing waste material and an oxygen containing gas while simultaneously injecting an oxygen containing gas above the melt bath in such a manner that the melt bath is maintained at substoichimetric conditions relative to oxygen and the region above the bath is maintained at superstoichiometric conditions relative to the available oxygen;
maintaining said bath at an elevated temperature of from 700°C to 1400°C and under a pressure of from slightly negative to 50 atmospheres; and
oxidizing and destroying the waste material, the elements of aluminum, calcium, and silicon being retained in the molten salt bath, and the nitrogen compounds reduced to gaseous elemental nitrogen.

2. The process of claim 1 wherein the molten salt bath comprises a mixture of an alkali metal or alkali earth carbonate or oxide and from 1 to 50 wt% of an alkali metal or alkali earth sulfate or sulfide.

3. The process of claim 1 wherein the oxygen-containing gas is simultaneously introduced (a) with the waste material into the melt and (b) immediately above the melt, such that waste material destruction with deficient oxygen occurs in the melt and oxidation of pyrolysis gases with excess oxygen occurs immediately above the melt.

4. The process of claim 1 wherein said bath is maintained at an elevated temperature of from 900°C to 1200°C.

5. The process of claim 1 wherein said bath is maintained at an elevated temperature of from 850°C to 950°C arid under a pressure of a psig to 10 atmospheres.

6. The process of claim 1 wherein said bath comprises 80 wt% sodium carbonate, 10 wt% sodium chloride, and 10 wt% sodium sulfate.

7. The process of claim 1 wherein said bath comprises 85 wt% calcium chloride, 10 wt% calcium oxide, and 5 wt% calcium sulfate or sulfide.

8. The process of claim 1 wherein oxygen is concurrently introduced into the molten salt bath with the waste, and oxygen is also independently introduced into the vessel above the bath such that waste material destruction with deficient oxygen ( 0.2 to 0.95 stoichiometric ratio) occurs in the melt and oxidation of pyrolysis gases with excess oxygen ( 1.2 to 1.6 stoichiometric ratio ) occurs above the bath.

9. The process of claim 1 wherein the oxygen-containing gas is simultaneously introduced (a) with the waste material into the melt and (b) into a heat utilizing device with the pyrolysis gases from the molten salt bed to directly oxidize the gases therein and release the heat content of the wastes within the heat utilizing device.

10. The process of claim 1 which is a batch process.

11. The process of claim 1 which is a continuous process.

12. Waste material disposed of by the process of claim 1.
